# EUROPEAN PATENT APPLICATION

(11) **EP 3 275 635 A1**
(43) Date of publication of application: **31.01.2018**
(21) Application number: 17179500.8
(22) Date of filing: 04.07.2017
(51) Int. Cl.: B29C 67/00, B33Y 30/00, B29C 64/106, B29C 64/20

(54) **DEVICE FOR 3D PRINTING AN OBJECT**

(30) Priority: 28.07.2016 IT 201600079170
(71) Applicant: Nest S.r.l., 60044 Fabriano (AN) (IT)
(72) Inventor: SANTINI, Stefano, 60044 Fabriano (AN) (IT); FIORANI, Franco, 60044 Fabriano (AN) (IT); BARBADORO, Antonio, 61047 San Lorenzo in Campo (PU) (IT)
(74) Representative: Santonicola, Paolo

(57) **Abstract**

The object of the present invention is a device (1) for 3D printing an object. The device (1) comprises a supporting structure (9), a printing head (8), an abutment table (7) for the object during printing and movement means, adapted to move the abutment table (7) along an axis (Z), in a manner such that the distance of the abutment table (7) from the printing head (8) can be varied when 3D printing the object.

According to the present invention, the movement means are assembled hung on the supporting structure (9).

## Description

The object of the present invention is a device for 3D printing an object, according to the preamble of claim 1.

By 3D printing it is intended the physical making of three-dimensional objects starting from computerized digital models. The 3D printing of objects occurs by means of additive production, i.e. by means of superimposition of a series of filament layers. Among the possible methods of 3D printing, one of those most commonly used today is the FFF (Fused Filament Fabrication) method, in which a filament made of plastic material, once unrolled from a coil, is treated by an extruding head which first heats, then extrudes and after this deposits the material. The material exits fused from the extrusion nozzle and is then deposited on an abutment table. Since both the nozzle and the table are movable, and since their movements can be controlled by means of a dedicated application, it is possible to obtain the desired geometry of the three-dimensional objects by tracing in accordance with the paths of the nozzle and table.

The technological field of 3D printing of objects is expected to be in strong expansion in the coming years, to the point that the value of the relative market is estimated to double itself from 2012 to 2025. This is mainly due to the fact that from a technological field tied to niche applications (e.g. architectural modeling or prototyping for the aerospace industry, for the military, for the biomedical industry and automobile industry), 3D printing is expected to quickly evolve, significantly coming to involve the home environment.

Indeed, 3D printing within a home has numerous potentialities; for example, there is the possibility of producing objects in the home that solve functional problems, of reproducing and substituting damaged components and hence of restoring the functionality of furnishing systems and electrical and electronic apparatuses, of creating particular decorations, toys or utensils in a personalized manner and even of printing food.

If on one hand there is great enthusiasm for the potentialities of 3D printing could have in the home environment, on the other hand the bulk of the 3D printing devices, their limited ergonomics and their use complexity are limiting the performance thereof on the market. In addition, such performance is negatively affected also by the limited knowledge regarding the management of the computerized digital models.

Therefore, the object of the present invention is to provide a device for 3D printing of objects, which solves the above-lamented drawbacks, especially regarding the application in the home environment.

Another object of the present invention is to make a device for 3D printing of objects which is particularly adapted for being installed in the home, having limited bulk and even being versioned as device integrated in the home furnishing, for example in the kitchen.

Another object of the present invention is to make a device for 3D printing of objects which has a high ease of use, thus making any interaction of the user with the device facilitated and ergonomic. In particular it is intended to make the ergonomic and interface logics of a device for 3D printing of objects in accordance with standards used for the most common and widespread home appliances. Finally, it is intended to contribute to the unifying process also of the file transfer logics.

Another object of the present invention is to make a device for 3D printing of objects that is optimized in the number of components employed and that therefore can be potentially sold at a competitive price, in line with the current average satisfaction of home appliance clients in post-sale assistance phase.

The objects of the present invention are intended to be reached by means of a device for 3D printing an object, of the type comprising a supporting structure, a printing head, an abutment table for the object and movement means, adapted to move the abutment table along an axis, in a manner such that the distance of the abutment table from the printing head can be varied when 3D printing the object. According to the invention, the movement means are assembled hung on the supporting structure.

Now, by way of a non-limiting example, the description will be reported of a preferred but not exclusive embodiment of a device for 3D printing an object according to the present invention, presented hereinbelow with reference to the enclosed drawings, in which:
- figure 1 is an axonometric view of a sectional, a device according to the present invention being installed in a recess of such sectional;
- figure 2 is an axonometric view of a device according to the present invention in its operating configuration;
- figure 2a is an axonometric view of a device according to the present invention in its operating configuration, in which components inside the device are visible;
- figure 3 is an axonometric view of a device according to the present invention in its service configuration;
- figure 3a is an axonometric view of a detail of a device according to the present invention in its service configuration;
- figure 4 is a section view of a detail that represents a technical solution advantageously applied in a device according to the present invention.

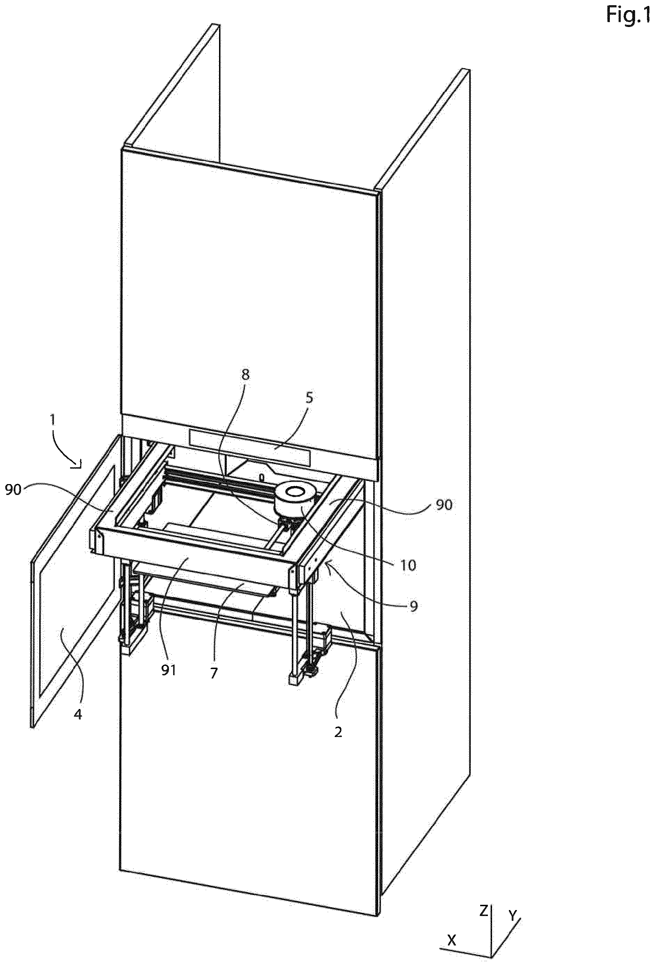

Figure 1 shows a furniture piece, for example a sectional, installed in a home environment, for example in a kitchen, in a living room, in an office or in a bedroom. Such furniture piece comprises at least one recess, in which a device 1 adapted for the 3D printing of an object is installed. Such device 1 is therefore configured as an embedded device. The device 1 is connected to an electrical power line and to a data network (via cable or wireless). As an alternative to the connection to the data network, it is possible that the device 1 is provided with a data door (e.g. a USB port) or with internal programming means (e.g. an integrated computer).

Advantageously, the device 1 operates in additive technology, composing the object to be printed by means of ordered deposition of polymer material at the fused filament physical stage. In particular the device 1 makes use of FFF (Fused Filament Fabrication) technology, since the material to be fused is provided as a filament of carefully calibrated diameter. FFF technology (also termed FDM technology, where FDM stands for Fused Deposition Modeling), for modeling an object, provide for the coordinated use of an extruding head, wherein the material of the filament, after having been fused by means of a heating element, is released by means of a nozzle, and an abutment table, possibly heated, on which the object is composed. The coordination between the extruding head and the abutment table is determined by the software that controls the machine path of the 3D printing process, based on a computerized model of the object to be printed. The material used in the printer is typically a polymer material (such as ABS, PLA, ABS ISO, PC, Ultem, PPSF, Polythermid, PA), but it can also be a different material (e.g. fluid-dense material if the device was set for printing food or clay).

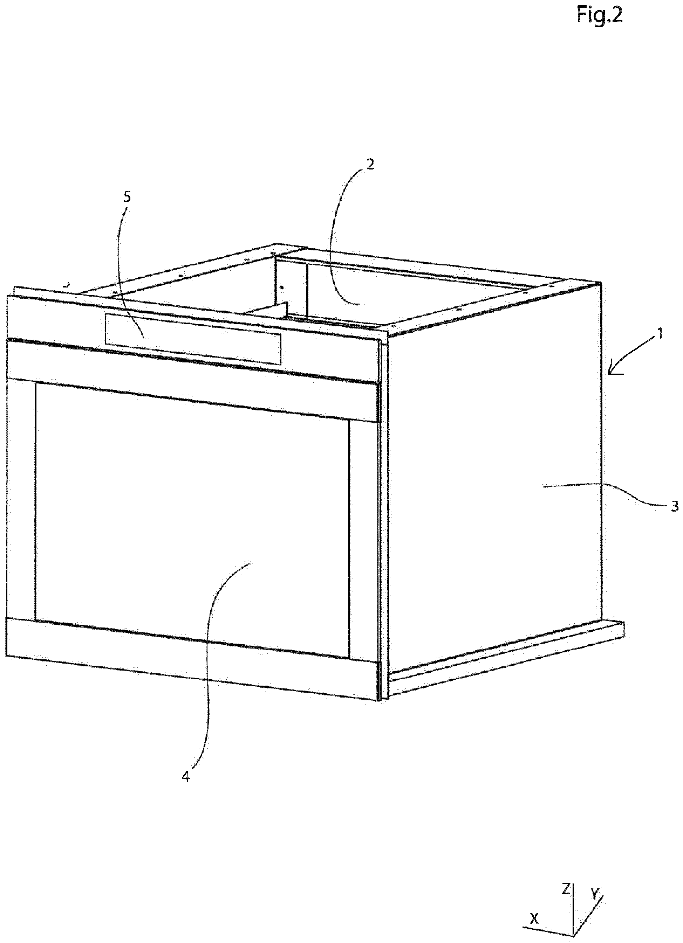

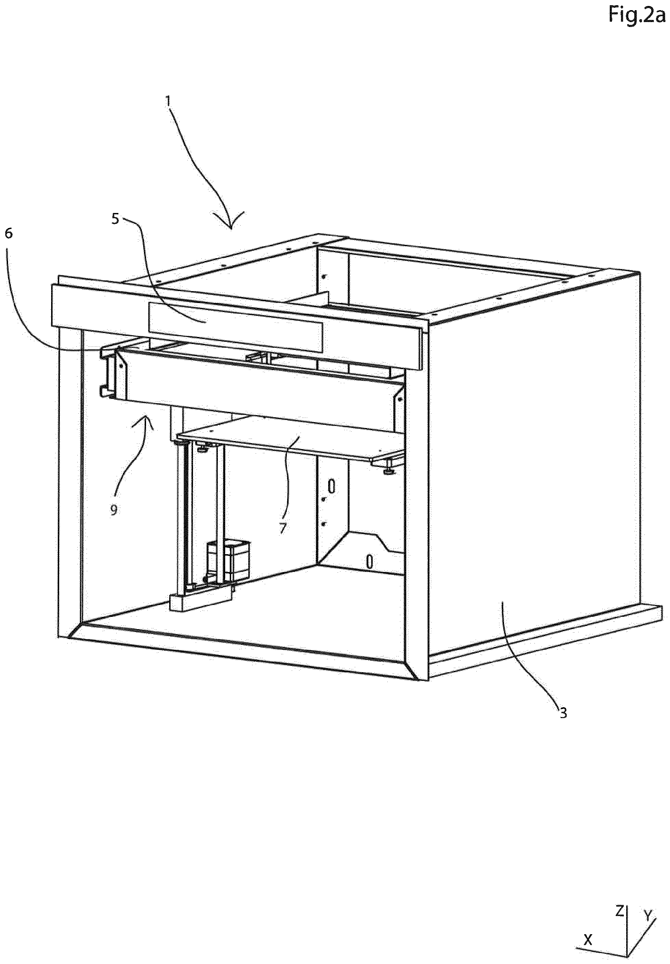

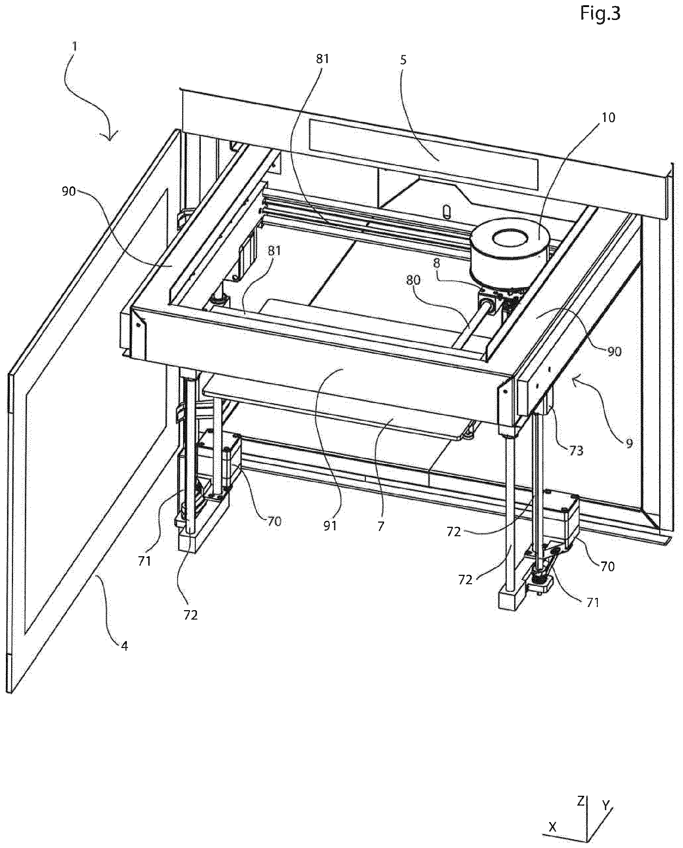

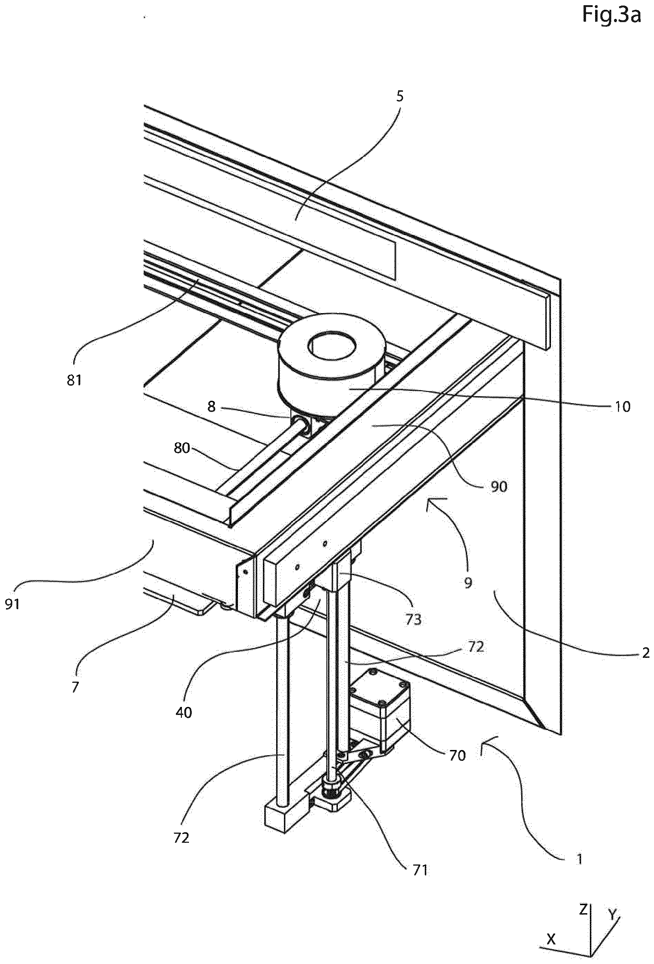

The device 1 for 3D printing an object according to one possible embodiment of the present invention is shown in figures 2, 2a, 3 and 3a, which represent two possible different configurations of the device 1. The device 1 comprises a supporting structure 9, typically with symmetric form, such as quadrangular or C-shape form, set for supporting the functional components of the device 1. The structure 9 in turn comprises a pair of bars 90 which in the embodiment pursuant to figures 2, 2a, 3 and 3a are arranged in lateral position (i.e. along the depth of the device 1) and are parallel to each other, and have substantially identical length and section. For the purpose of increasing the rigidity and strength of the structure 9, such structure 9 further comprises a crossbar 91 that connects the bars 90 together. In the embodiment pursuant to figures 2, 2a, 3 and 3a, the crossbar 91 connects together the front ends of the bars 90, so that the crossbar 91 is extended along the width of the device 1. The crossbar 91 is substantially orthogonal to the bars 90. Since the bars 90 are positioned substantially at the same height, the plane on which such bars 90 and the crossbar 91 lie is a substantially horizontal plane. The structure 9 can be made of ferrous or non-ferrous metallic material: in such case, advantageously, the bars 90 and the crossbar 91 have a tubular or in any case hollow section in order to avoid overly weighing down the structure 9.

In addition to the structure 9, the device 1 comprises an abutment table 7 and a printing head 8 (typically an extruding head). In order to allow the composition of the object that is printed three-dimensionally by the device 1, the table 7 and the head 8 can be moved relative to each other along the three dimensions. In particular, the table 7 is conferred the possibility of being moved along a first axis (axis Z), while the head 8 is conferred the possibility of being moved in the plane orthogonal to the axis Z, and hence along a second axis (axis X) and along a third axis (axis Y) substantially orthogonal to each other. Preferably, the axis Z is oriented along the height of the device 1 and is therefore a substantially vertical axis, while the axis X and the axis Y are respectively oriented along the width of the device 1 and along the depth of the device 1, so that the plane X-Y is substantially a horizontal plane.

In order to obtain the desired movements of the table 7 and of the head 8, the device 1 comprises first and second movement means. The first movement means are adapted to move the table 7 along the axis Z (i.e. along the axis orthogonal to the table 7), in a manner such that the distance of the abutment table 7 from the printing head 8 can be varied when 3D printing the objects. In particular, the distance of the table 7 from the head 8 is increased in the course of the printing process, thus allowing the layer deposition of the material and therefore the composition of the objects. Once the head 8 has concluded the deposition of a layer, the first movement means provide to increase the distance between the table 7 and the head 8 by a predetermined quantity (the smaller the quantity, the more one wishes to reduce the roughness of the printed object along the axis Z), in a manner such that the head 8 can then proceed with the deposition of the next layer. The second movement means are instead adapted to move the head 8 within the plane X-Y (or within a plane substantially parallel to the table 7), such that the head 8 can deposit, on each layer, the requested material based on the modeling of the object to be printed.

The first and the second movement means can advantageously be installed in the device 1 in the form of electrically power supplied actuators that are constrained to the structure 9.

According to the present invention, the first movement means are assembled hung on the supporting structure 9. Such assembly of the first movement means (and hence of table 7) has the undoubted advantage of being easy and compact, such that device 1 overall results considerably simplified, with a limited number of components, a lower weight and a more competitive cost.

In particular, the first movement means are assembled cantilevered on the bars 90 and therefore come to be situated symmetrically positioned with respect to the symmetry plane of the structure 9. In such a manner, the table 7 is supported and is moved in an equilibrated manner, thus ensuring in the course of the composition of the objects a constant parallelism between the table 7 and the plane X-Y in which the head 8 is moved.

In the embodiment pursuant to figures 2, 2a, 3 and 3a, the table 7 is supported and moved by means of first movement means comprising at least one electric linear actuator 70 with a worm gear 71 and a pair of columns 72, which are arranged substantially parallel to the worm gear 71. Along the columns 72, an arm 73 can translate that is kinematically coupled to the worm gear 71 and rigidly connected to the table 7. If electrical heating is provided for the table 7, electrical cables can transit inside the arm 73 which are suitable for ensuring the power supply of the heating means.

The second movement means comprise actuation means which make use of the structure 9 not only for the support thereof, but also for ensuring that the movements of the head 8 actually occur on the plane X-Y, and hence nearly parallel to the table 7. According to a possible embodiment reported as a non-limiting example, the actuation means comprise a first actuator adapted to ensure that the ends of a rod 80 oriented according to the axis Y (i.e. nearly parallel to the bars 90) translate along tracks 81 oriented according to the axis X (i.e. nearly orthogonal to the bars 90) and a second actuator adapted to ensure that the head 8 translates along the rod 80. In such a manner, it is ensured that the actuation means for the second movement means move the printing head 8 along two separate axes (axis X and axis Y) that are substantially orthogonal to each other, and both orthogonal to the axis Z on which the first movement means operate.

The device 1 according to the present invention is advantageously arranged to be installed embedded in a recess, similar to what occurs for different home appliances. For such purpose, the device 1 comprises an internally hollow casing 3, similar to the casing used for example in the baking ovens. The dimensions of the casing 3 are therefore compatible with the standard dimensions of recesses of sectionals, e.g. about 600 mm width, about 500 mm depth and about 450 mm height. Fixing means are applied to the casing 3 (e.g. screws or pins) suitable for allowing a stable housing for the casing 3, and consequently for the entire device 1, within the recess. The embedded configuration of the device 1 is extremely advantageous and *per se* represents an invention: indeed, in such a manner one resolves the problem of the bulk of the device 1 and of its difficult placement in a home environment.

The embedded configuration makes it possible to include the device 1 in the equipment provided, for example integrated in a modular kitchen.

The casing 3 defines a housing cavity 2 in which the functional components of the device 1 are housed, in particular the supporting structure 9. Advantageously, such cavity 2, stably closed on four sides by the walls of the casing 3 (mainly by the upper and lower side walls), can also be closed on the front side (i.e. on the single side of the casing 3 available to the user following the embedded installation of the device 1) by means of a door 4, which allows the cavity 2 to be entirely shut or accessible in accordance with the requirements (for example the cavity 2 can remain shut during operation 1 and instead be accessible for picking up the object once the 3D printing thereof has terminated). The door 4 is advantageously made of transparent or translucent material (e.g. plastic or glass) in order to give the user the possibility to monitor the interior of the cavity 2, for example for observing the objects during the composition thereof. Alternatively, the door 4 can be provided with an inspection window.

A function of the door 4 is therefore that of selectively occluding the access opening 40 for gaining access to the cavity 2. Therefore, the door 4 is movable with respect to the casing 3 such that, when closed, it is able to prevent access to the cavity 2 by means of occlusion of the mouth 40 and, when suitably open, it is able to allow access to the cavity 2 through the mouth 40. The door 4 can be shaped in different ways: for example, it can assume the shape of a door hinged to the casing 3 at one side of the mouth 40 and capable of rotating with respect to the casing 3 around a substantially vertical axis (in order to allow an easy access to the cavity 2, it is advantageous that the opening angle of the door 4 is greater than 110°). Alternatively, the door can be shaped as a door rotatable around a substantially horizontal axis, or as a door slidable with respect to the casing 3, or as a door that can open as a roller shutter.

Advantageously, the device 1 comprises interface means, adapted to enable the user to interact with the device 1. Typically, the interface means comprise display means (such as screens, warning lights and so forth) and drive means (such as buttons, knobs, switches and so forth - mechanical or touch). In the embodiment of the invention represented in the figures that make up the present description, the interface means are made in the form of a riser 5 applied to the casing 3 on top of the door 4. Nevertheless, it is evident that the riser can be differently positioned with respect to the door (e.g. below the door or alongside the door) or even on the door itself.

In order to significantly increase the ergonomics of the device 1, it is advantageous to confer, to the structure 9, the capacity to be at least partially extracted from the cavity 2. Indeed, in such a manner, the user can carry out, with the maximum comfort, operations such as picking up the object at the end of printing or applying and substituting possible accessories necessary for the operation of the device 1 (including the filament of material to be printed for the power supply of the head 8). The capacity of the structure 9 to be at least partially extracted from the cavity 2 allows obtaining considerable benefits, also regarding maintenance or assistance of the device 1 onsite, since in this manner the parts of the device 1 potentially susceptible for maintenance or post-sale assistance are easily reachable.

Therefore, the device 1 can operate between an operating configuration (this is the configuration in which the 3D printing of the objects can occur) and a service configuration (in which the user can interact with the device 1, for picking up the objects at the end of printing or for applying or substituting accessories or for maintenance or assistance operations). The operating configuration is shown in figures 2 and 2a. Figure 2 differs from figure 2a since in the former the device 1 is shown in its entirety, while in the latter the door 4 is not shown so as to better illustrate the internal components of the device 1. In the operating configuration, the mouth 40 is occluded by the door 4 and the structure 9 is situated inside the cavity 2. Due to the interposition of the door 4, the user cannot access the cavity 2 and therefore he/she cannot reach functional elements of the device 1, such as the table 7 and the head 8. The service configuration is shown in figures 3 and 3a, the second representing a detail of the first. In the service configuration, the door 4 is in open position and therefore no longer occludes the mouth 40, the user can access the cavity 2 and therefore can reach functional elements of the device 1, such as the table 7 and the head 8.

Advantageously, the interactions of the user with the device 1 are made much easier since, in the service configuration of the device 1, the at least partial extraction of the structure 9 (and with this the functional elements of the device 1, such as the table 7 and the head 8) from the cavity 2 is provided for. For such purpose, the device 1 comprises extracting means applied to the casing 3 and adapted to enable the structure 9 to be at least partially extracted from the cavity 2. Advantageously the extraction direction of the structure 9 is substantially orthogonal to the axis Z and is in particular parallel to the axis Y (i.e. substantially parallel to the bars 90). The extraction of the structure 9 can occur following a traction exerted by the user, or following a specific command imparted by the user (or even automatically at the end of the 3D printing process), since in such case the extracting means are provided with electrical actuators. Analogously, also the subsequent return of the structure 9 in the cavity 2 can occur manually or by means of bringing electrical actuators.

Advantageously, on the lateral walls of the casing 3, telescopic guides 6 are symmetrically applied (possibly integrally made with the casing 3 by means of drawing the lateral walls) in order to allow the structure 9 (and with this also the table 7 and the head 8) to slide relative to the casing 3 along the aforesaid extraction direction. The guides 6 can be coupled with the bars 90, or alternatively with elements applied to the bars 90 for such purpose. In order to prevent the structure 9 from being detached from the casing 3, the guides 6 are associated with end stop abutments that act once a predefined extraction has been reached, stopping the further sliding of the structure 9.

If the structure 9 comprises the crossbar 91 for the connection of the bars 90 and the extraction of the structure 9 from the casing 3 occurs manually, the user of the device 1 employs the crossbar 91 in order to apply the necessary traction to the structure 9 for extracting the structure 9, as the crossbar 91 is situated nearly orthogonal to the guides 6. In such case, the crossbar 91 is preferably associated with gripping means, such as a handle, adapted to facilitate the extraction of the structure 9, since it is easier for the user to exert the necessary traction thereon.

Advantageously, it is also possible to provide that the door is translatable with respect to the casing 3 and that it is in fact integrated in the structure 9, coming to act as a crossbar connecting the bars 90 or being rigidly connected to the crossbar 91. In such case, by simply exerting an easy traction force on the handle applied to the door, the user - simultaneously and by means of a single interaction - obtains the opening of the door and the at least partial extraction of the structure 9 from the cavity 2.

From that described, it is clearly understood that the present invention fully attains the desired advantages in terms of reduction of bulk, of increased ease of use and of increased essentiality of the structure. Finally, it is underlined that the present invention can be conveniently applied in combination with a further improvement which will be described hereinbelow and which *per se* represents an inventive technical solution.

Such improvement regards the printing head 8, which is an extruding head arranged for carrying out the 3D printing of an object by making use of the additive FFF (Fused Filament Fabrication) technology. The FFF technology provides that the material useful for 3D printing of the objects is provided to the head 8 in filament form. Therefore, the 3D printing 1 device is used in combination with a coil, on which the filament is wound.

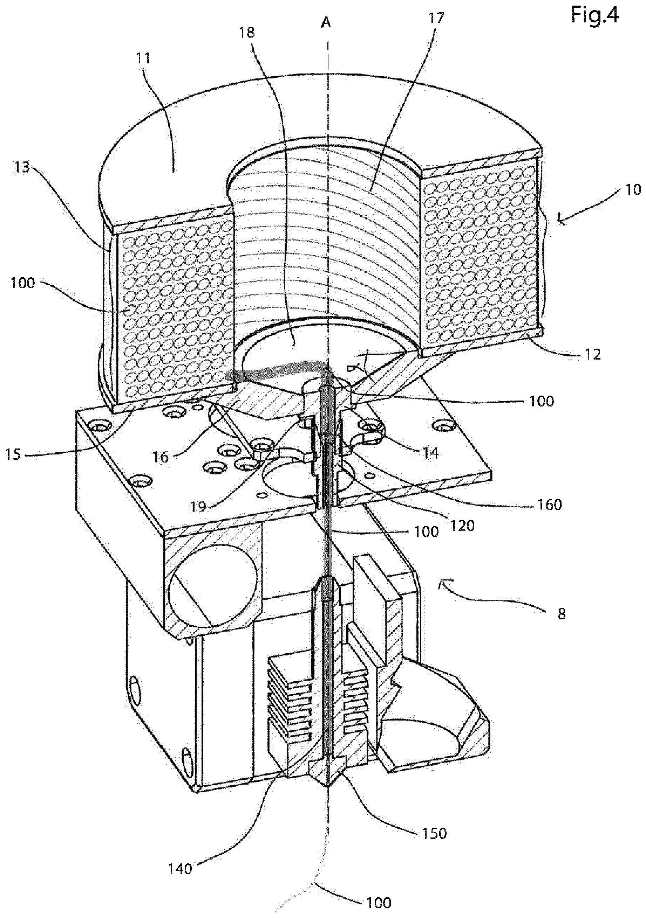

Figure 4 shows, in section, a printing head 8 in combination with a coil 10 which comprises a filament 100 enclosed within the coil 10. Advantageously, the coil 10 has substantially axially symmetric form and is substantially coaxial with respect to the parts of the head 8 that the filament 100 traverses. The coil 10 is directly supported by the head 8 in a manner that allows the coil 10 the degree of rotational freedom around its axis A. In such a manner, the simple traction exerted by the head 8 on the filament 100 is sufficient for causing the rotation of the coil 10 and consequently the unwinding of the filament 100.

A particular characteristic of the coil 10 is that of being configured in a manner such that the unwinding of the filament 100 occurs towards the interior rather than towards the exterior. For such purpose, the coil 10 comprises an upper flange 11 and a lower flange 12, the filament 100 being wound between the two flanges. Outside the filament 100, a sheath 13 is arranged (e.g. a sheath made of thermoshrinkable material or of adhesive material) which enables the unrolling of the filament 100 only inside the volume defined by the wound filament 100.

The unwinding of the filament 100 occurs by means of a dispensing conduit 14 integral with the lower flange 12, which can be made of a material different from the rest of the lower flange 12 (for example made of metal, the lower flange 12 being mainly made of plastic). Alternatively, the lower flange 12 can be made in the form of a single body also comprising the dispensing conduit 14. The dispensing conduit 14 has axially symmetric shape and is calibrated as a function of the size of the filament 100 (e.g. the filament 100 can have an external diameter of 1.75 mm or 2.85 mm). In order to make possible the exercise of the initial traction force necessary to start the unwinding of the filament 100, the coil 10 is provided with one end of the filament 100 free, outside the dispensing conduit 14. The terminal end of the dispensing conduit 14 can be suitably tapered so as to facilitate the insertion of such end in the connection section of the head 8.

Advantageously the lower flange 12 comprises a peripheral portion 15 and an intermediate portion 16, the intermediate portion 16 being arranged between the peripheral portion 15 and the dispensing conduit 14. While the peripheral portion 15 has a substantially planar extension, so as to be maintained substantially parallel to the upper flange 11, the intermediate portion 16 has a substantially frustoconical extension, such that the intermediate portion 16 is tilted with respect to the peripheral portion 15, in moving away from the upper flange 11. In such a manner, between the volume 17 inside the wound filament 100 and the dispensing conduit 14, an opening volume 18 is created, adapted to facilitate the complete unwinding of the filament 100, preventing the creation of sudden variations of direction in the path of the filament 100 which can subject it to breakage risks due to traction forces. The tilt angle α of the intermediate portion 16 with respect to the peripheral portion 15 is comprised between 10° and 50°, more preferably between 20° and 40°, still more preferably between 25° and 30°.

In order to allow the coil 10 to be supported so as to allow it to rotate around the axis A, the lower flange 12 comprises an abutment surface 19, adapted to allow the coil 10, when in abutment against the head 8, to be maintained in position, and to allow the filament 100 to be unwound due to the rotation of the coil 10 caused by the traction exerted on the filament 100 by the head 8.

In the embodiment pursuant to figure 4, the abutment surface 19 is obtained by means of a step variation of the external diameter of the dispensing conduit 14. Such step variation allows obtaining the abutment surface 19 directly on the dispensing conduit 14, the abutment surface 19 being substantially orthogonal to the axis of the dispensing conduit 14 (and consequently to the axis A of the coil 10). If the dispensing conduit 14 is made of metal, there is the advantage of being able to exploit a low friction material, with limited sensitivity to wear phenomena, for the abutment surface 19.

Still in figure 4, the parts of the head 8 which are traversed by the filament 100 are represented in section. The path of the filament 100 within the printing head 8 starts with the supplying conduit 120 and terminates with the extruding nozzle 150. The supplying conduit 120 has axially symmetric shape and is set for loading the material to be extruded into the head 8, receiving the filament 100 from the coil 10. The filament 100 is then made taut by means of a thread tensioner, usually obtained by means of a gear system, which has the function of suitably tensioning the filament 100, such that it traverses the head 8 with a nearly constant speed (a nearly constant speed of the filament 100 in fact ensures that also the flow of material exiting from the head 8 is constant and hence the deposition is uniform). Downstream of the thread tensioner, there is then the melting of the material of the filament 100 which occurs inside a melting chamber 140, by means of the heat provided by a heating element. Finally, the nozzle 150 releases the fused material. The diameter of the nozzle 150 is accurately calibrated and is generally comprised between 0.2 mm and 0.3 mm.

A particular characteristic of the head 8 is that of comprising a supporting surface 160, arranged peripherally with respect to the supplying conduit 120 and set to directly support the coil 10, when in contact with the abutment surface 19 of the coil 10. In addition to allowing the coil 10 to be maintained in position, the interfacing between the supporting surface 160 of the head 8 and the abutment surface 19 of the coil 10 is such to allow the coil 10 to be free to rotate around the axis A during the 3D printing process, allowing the unwinding of the filament 100 which can thus be extruded.

The invention has been described by referring to one embodiment reported by way of a non-limiting example. Nevertheless, it is clear to the man skilled in the art that numerous variants of the invention are possible, such variants falling within the protective scope of the following claims.

## Claims

1. Device (1) for 3D printing an object, comprising:
- a supporting structure (9);
- a printing head (8);
- an abutment table (7) for said object and
- first movement means, said first movement means being adapted to move said abutment table along a first axis (Z), so that the distance of said abutment table (7) from said printing head (8) can be varied when 3D printing said object,
**characterized in that**
said first movement means are assembled hung on said supporting structure (9).

2. Device (1) according to claim 1, comprising an internally hollow casing (3), adapted to define a cavity (2) for housing said supporting structure (9), extracting means being applied to said casing (3), such extracting means adapted to enable said supporting structure (3) to be at least partially extracted from said cavity (2), the extraction direction of said supporting structure (9) being in particular substantially orthogonal to said first axis (Z).

3. Device (1) according to claim 2, wherein said casing (3) comprises an access opening (40) for gaining access to said cavity (2) and wherein a door (4) is associated with said casing (3), said door (4) being movable with respect to said casing (3) in order to be capable of adopting at least one first predefined position and at least one second predefined position, in said first predefined position said access opening (40) being occluded in order to prevent the access to said cavity (2) and/or the extraction of said supporting structure (9) and in said second predefined position said access opening (40) remaining not occluded in order to enable the access to said cavity (2) and/or the extraction of said supporting structure (9), the passage from said predefined position of said door (4) to said second predefined position of said door (4) in particular occurring by means of a rotation of said door (4) with respect to said casing (3), the amplitude of such rotation being preferably greater than 110°.

4. Device (1) according to claim 2 or 3, wherein fixing means are associated with said casing (3), such fixing means adapted to enable the installation of said casing in a recess, for example in a recess of a sectional.

5. Device (1) according to any one of the preceding claims, wherein said supporting structure (9) exhibits a symmetry plane and comprises a pair of bars (90) disposed in symmetric positions with respect to said symmetry plane, wherein said first movement means are assembled hung on each of said bars (90).

6. Device (1) according to claim 5, wherein said supporting structure (9) further comprises a crossbar (91) and wherein said bars are connected to each other by means of said crossbar (91).

7. Device (1) according to claims 2 and 6, wherein said extracting means comprise a pair of telescopic guides (6) or a pair of tracks and wherein said crossbar (91) is substantially orthogonal to said telescopic guides (6) or to said tracks, said crossbar (91) being preferably associated with gripping means, such as for example a handle, adapted to facilitate the extraction of said supporting structure (9), the passage from said first predefined position of said door (4) to said second predefined position of said door (4) occurring in particular by means of a translation of said door (4) with respect to said casing (3), said door (4) being fixed to said crossbar (91) or said door (4) being integrated in said supporting structure (9) acting as a crossbar connecting said bars (90).

8. Device (1) according to any one of the preceding claims, said first movement means comprising at least one electric linear actuator (70) coupled to a worm gear (71).

9. Device (1) according to any one of the preceding claims, comprising second movement means adapted to move said printing head (8) within a plane substantially parallel to said abutment table (7), wherein said second movement means are constrained to said supporting structure (9) and wherein said second movement means preferably comprise actuating means adapted to move said printing head (8) along a second axis (X) and along a third axis (Y) substantially orthogonal to each other, said first axis (Z) being substantially orthogonal both to said second axis (X) and said third axis (Y).

10. Device (1) according to any one of the preceding claims, wherein said printing head (8) is an extruding head and is arranged for performing the 3D printing of said object by means of the FFF (Fused Filament Fabrication) additive technology, wherein said printing head (8) preferably comprises a supplying conduit (120) adapted to load as a filament (100) the material necessary for 3D printing said object, and a supporting surface (160) adapted to support a coil (10) on which said filament (100) is wound, said supplying conduit (120) preferably having an axially symmetric shape and said supporting surface (160) being preferably configured for enabling said coil (10) to rotate around its axis (A) when 3D printing said object.
